# EUROPEAN PATENT APPLICATION

(11) **EP 1 965 078 A1**
(43) Date of publication of application: **03.09.2008**
(21) Application number: 06823493.9
(22) Date of filing: 22.11.2006
(51) Int. Cl.: F03G 7/06, B21D 39/00, H01R 43/048, H01R 43/052

(54) **ELECTRODE CAULKING DEVICE**

(30) Priority: 25.11.2005 JP 2005341207; 26.05.2006 JP 2006147369
(71) Applicant: MATSUSHITA ELECTRIC WORKS, LTD., Kadoma-shi, Osaka 571-8686 (JP)
(72) Inventor: SAITOH, Akihiko, Kadoma-shi, Osaka 571-8686 (JP); DOHNO, Shigeru, Kadoma-shi, Osaka 571-8686 (JP); YAMAMOTO, Ken, Kadoma-shi, Osaka 571-8686 (JP)
(74) Representative: Mackenzie, Andrew Bryan
(86) International application number: PCT/JP2006/323266
(87) International publication number: WO 2007/060967

(57) **Abstract**

An electrode calking apparatus that enables to fix electrodes 2 at positions distant a predetermined distance on a shape memory alloy wire 1 in a condition that the shape memory alloy wire 1 is heated to a temperature recovering an original shape is provided. The electrode calking apparatus 101 comprises: a loading mechanism 20 for applying a predetermined tension to the shape memory alloy wire 1 in an axial direction thereof; a pair of supporting units 4 that supports the shape memory alloy wire 1 at two supporting points distant a predetermined distance in the axial direction, and holds a pair of electrodes each having a portion to be calked; a pair of energization contacting units 5 that contacts the shape memory alloy wire 1 at two contacting points between which a pair of the supporting units 4 are disposed, and supplies electric current between the two contacting points; and a pair of pressing units 6 that fixes the electrodes 2 to the shape memory alloy wire 1 by calking by plastically deforming the portions to be calked of the electrodes 2 held on the supporting units 4.

## Description

### Technical Field

The present invention relates to an electrode calking apparatus to fix a pair of electrodes with calking at both ends of a shape memory alloy wire.

### Background Art

A shape memory alloy wire has a characteristic to recover in stored shape when temperature thereof reaches to a predetermined value by heating. Therefore, the shape memory alloy wire is conventionally used as an actuator of machine product by using such a characteristic (see Japanese Patent Publication No. Hei 6-222752, for example). As for a heating method of the shape memory alloy wire, it is propose to supply a current to the shape memory alloy wire directly so as to heat by utilizing Joule heat generated in the shape memory alloy wire. Such a heating method is called "energization heating" in the following description. Heating control of the shape memory alloy wire becomes easy by using this energization heating.

In order to perform the energization heating to the shape memory alloy wire, it is preferable to join electrodes for supplying electric current on both ends of the shape memory alloy wire. By the way, as for the shape memory alloy wire, overall length in energization heating differs from overall length before heating (ordinary temperature time) due to thermal expansion. Generally, the shape memory alloy wire is cut in a predetermined overall length in ordinary temperature, and electrodes are joined on both ends thereof. Alternatively, electrodes are joined on two points on the shape memory alloy wire distant a predetermined distance. Therefore, even when energization heating is performed to the shape memory alloy wire in a condition built in a machine product so as to recover the original shape, the overall length of the shape memory alloy wire or the distance between the electrodes is elongated by a component due to thermal expansion. Accordingly, a stress occurred in the shape memory alloy wire includes error component due to thermal expansion, so that it is difficult to control the stress precisely and stably. Consequently, an overload may act on the shape memory alloy wire in heating condition, and thus, aged deterioration may occur.

### Disclosure of Invention

The present invention is conceived to solve the problems of the above mentioned prior art, and aimed to provide an electrode calking apparatus which enables to attach electrodes at points on a shape memory alloy wire distant a predetermined distance.

An electrode calking apparatus in accordance with an aspect of the present invention fixes a pair of electrodes on a shape memory alloy wire by calking.
The electrode calking apparatus comprises:
a loading mechanism that applies a predetermined tension to the shape memory alloy wire in an axial direction thereof;
a pair of supporting units that supports the shape memory alloy wire at two supporting points distant a predetermined distance in the axial direction, and holds a pair of electrodes each having a portion to be calked;
a pair of energization contacting units that contacts the shape memory alloy wire at two contacting points between which a pair of the supporting units are disposed, and supplies electric current between the two contacting points; and
a pair of pressing units that fixes the electrodes to the shape memory alloy wire by calking by plastically deforming the portions to be calked of the electrodes held on the supporting units.

According to the above mentioned configuration, a pair of the electrodes can be fixed at positions on the shape memory alloy wire distant a predetermined distance L under a heating condition to heat the shape memory alloy wire at a temperature enabling to recover to an original shape. Since the shape memory alloy wire obtained by this way is considered the variation of the allover length due to thermal expansion, a desired stress can be controlled precisely and stably even when the shape memory alloy wire is heated to the temperature enabling to recover to the original shape. In addition, a possibility that an overload is applied to the shape memory alloy wire in heating condition can be reduced so that aged deterioration hardly occurs.

### Brief Description of Drawings

FIGS. 1A to 1C are respectively front views showing a configuration and motion of an electrode calking apparatus in accordance with a first embodiment of the present invention, and especially, FIG. 1A shows them before supplying electric current, FIG. 1B shows them at a start time of supplying electric current, and FIG. 1C shows them in calking operation.
FIGS. 2A and 2B are drawings showing a configuration of a substantial portion of the electrode calking apparatus in accordance with the above first embodiment, and especially, FIG. 2A is a side view showing a condition before the calking operation, and FIG. 2B is an A-A sectional view of FIG. 2A.
FIG. 3 is a front view showing a configuration and motion of an electrode calking apparatus in accordance with a second embodiment of the present invention.
FIG. 4 is a front view showing a configuration and motion of an electrode calking apparatus in accordance with a third embodiment of the present invention.
FIGS. 5A and 5B are front views showing a configuration and motion of an electrode calking apparatus in accordance with a fourth embodiment of the present invention, and especially, FIG. 5A shows a condition before calking operation, and FIG. 2B shows a condition in the calking operation.
FIGS. 6A to 6C are a front view and side views show a configuration and motion of a substantial portion of an electrode calking apparatus in accordance with a fifth embodiment of the present invention, and especially, FIG. 6A shows a condition before calking operation, FIG. 6B is a B-B sectional view of FIG. 6A, and FIG. 6C is the B-B sectional view in the calking operation.
FIGS. 7A and 7B are a front view and a side view showing a configuration of an electrode calking apparatus in accordance with a sixth embodiment of the present invention, and especially, FIG. 7A shows a condition before calking operation, and FIG. 7B is a C-C sectional view of FIG. 7A.

### Best Mode for Carrying Out the Invention

### (First Embodiment)

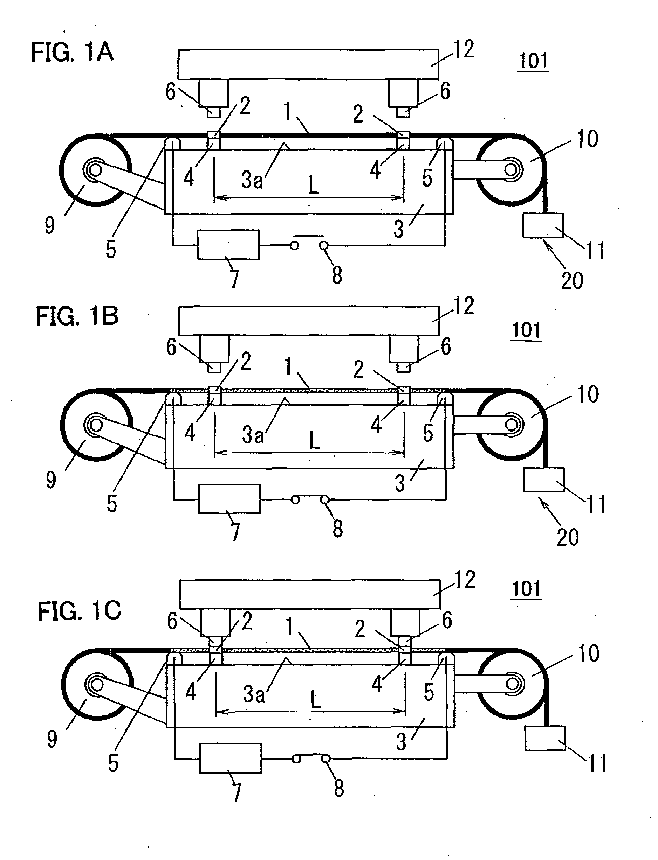

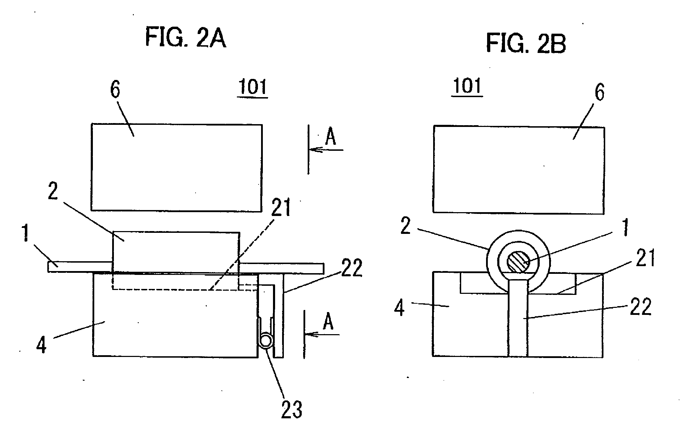

An electrode calking apparatus in accordance with a first embodiment of the present invention is described with reference to FIGS. 1A to 1C, 2A and 2B. FIGS. 1A to 1C show a configuration of an electrode calking apparatus 101 in accordance with the first embodiment. This electrode calking apparatus 101 is an apparatus for attaching electrodes 2 at positions distant a predetermined distance on a shape memory alloy wire 1 in a heated condition at a temperature that the shape memory alloy wire 1 recovers in original shape.

The electrode calking apparatus 101 comprises a loading mechanism 20 for applying a predetermined tension to the shape memory alloy wire 1, a pair of supporting units 4 which supports the shape memory alloy wire 1 at two supporting points distant a predetermined distance in an axial direction thereof, and holds the electrodes 2 each having a portion to be calked, a pair of energization contacting units 5 which contacts the shape memory alloy wire 1 at two contacting points between which a pair of the supporting units 4 are disposed, and supplies electric current between the two contacting points, and a pair of pressing units 6 which calks the electrodes 2 to the shape memory alloy wire 1 by plastically deforming the portions to be calked of the electrodes 2 held on the supporting units 4.

The above mentioned a pair of the supporting units 4 and a pair of the energization contacting units 5 are disposed on a supporting face 3a which is an upper face of a pedestal 3 and on a straight line. In addition, a pair of the pressing units 6 is disposed on a lower face of a pressing support 12 which is provided to face the supporting face 3a of the pedestal 3 and at positions facing a pair of the supporting units 4.

A pair of the supporting units 4 supports the shape memory alloy wire 1 on the above straight line, and each supports one of the electrodes 2 used for energization heating. The supporting units 4 are respectively disposed at positions distant the predetermined distance L on the supporting face 3a of the pedestal 3, and thereby, the shape memory alloy wire 1 is supported at two points distant the predetermined distance L in the axial direction thereof.

As shown in FIGS. 2A and 2B, the electrode 2 has a cylindrical shape that both ends thereof are opened so as to penetrate the shape memory alloy wire 1 therethrough. When the electrode 2 is entirely flatten out by pressing unit 6, the shape memory alloy wire 1 penetrating inside of the electrode 2 and the electrode 2 are fixed by calking. In other words, the electrode 2 in this embodiment entirely configures a portion to be calked which is to be fixed to the shape memory alloy wire 1 by calking. The electrode 2 of cylindrical shape is held in a concavity 21 having a rectangular section formed on a top face of supporting unit 4. The concavity 21 has a predetermined air gap for the electrode 2 before fixing in a radial direction thereof (in a longitudinal direction in FIG. 2B), and guides transformation of the electrode 2 so that a cross-sectional shape of the electrode 2 after transformation becomes substantially rectangular shape.

In addition, positioning of the electrode 2 in the concavity 21 in an axial direction of the shape memory alloy wire 1 (in a longitudinal direction in FIG. 2A) is performed by pushing a moving member (a positioning member in the axial direction) 22 for fixing the electrode to an end face of the electrode 2. The moving member 22 has an L-shape and an end thereof is rotatably coupled to the supporting unit 4 through an elastic member 23 such as a torsion spring. When the moving member 22 is rotated in counterclockwise direction of FIG. 2A against the supporting unit 4 by a biasing force of the elastic member 23, the other end of the moving member 22 contacts an end face of the electrode 2 in the axial direction so that the electrode 2 is positioned in the axial direction.

A pair of the energization contacting units 5 is disposed at positions on a straight line and on the supporting face 3a of the pedestal 3, between which the above a pair of the supporting units 4 is disposed. Each of the energization contacting units 5 contacts the shape memory alloy wire 1. Since an electric power supply 7 and a switch are connected between a pair of the energization contacting units 5, when the switch 8 is turned on, electric current flows in an order of the electric power supply 7, one energization contacting units 5, the shape memory alloy wire 1, the other energization contacting units 5, the switch 8 and the electric power supply 7, so that an area of the shape memory alloy wire 1 between the energization contacting units 5 to which electric current can be supplied can be heated by energization. The area to which electric current can be supplied includes an area of the predetermined distance L of the shape memory alloy wire 1 between both of the supporting units 4 (that is, the electrodes 2 supported by the supporting units 4).

The loading mechanism 20 for applying the predetermined tension to the shape memory alloy wire 1 is configured by a first pulley 9 which hooks an end of the shape memory alloy wire 1, a second pulley 10 which guides the other end of the shape memory alloy wire 1, and a spindle 11 coupled to the other end of the shape memory alloy wire 1.

A pair of the pressing units 6 is disposed on the lower face of the pressing support 12 with the predetermined distance L so as to face a pair of the supporting units 4, and moved up and down with the pressing support 12 by an elevating mechanism not illustrated in the figures. Thereby, the shape memory alloy wire 1 and the electrodes 2 can be pressed in a pinching condition between the pressing units 6 and the supporting units 4, and thus, the shape memory alloy wire 1 and the electrodes 2 can be fixed by calking.

Subsequently, processes to fix the electrodes 2 to the shape memory alloy wire 1 by calking with using the above mentioned electrode calking apparatus 101 are described. First, as shown in FIG. 1A, an end of the shape memory alloy wire 1 is hooked on the first pulley 9, the shape memory alloy wire 1 is supported on a pair of the supporting units 4 in such a condition, and the shape memory alloy wire 1 is set on the supporting face 3a of the pedestal 3 so as to contact with a pair of energization contacting units 5 at positions between which the supporting units 4 are disposed. Furthermore, the spindle 11 is fixed to the other end of the shape memory alloy wire 1 so as to act the predetermined tension to expand the shape memory alloy wire 1 in the axial direction.

Subsequently, as shown in FIG. 1B, when the switch 8 is turned on, a voltage is applied to flow a predetermined electric current between a pair of the energization contacting units 5 from the electric power supply 7. Thereby, the electric current flows between two points of the shape memory alloy wire 1 contacting to the energization contacting units 5. A quantity of the electric current at this time is set to be necessary and sufficient to heat the shape memory alloy wire 1 to a predetermined temperature at which the shape memory alloy wire 1 transforms (recovers to the original shape). Even when the shape memory alloy wire 1 is heated to the temperature to generate the transformation and expanded thermally by such energization, a tension due to the spindle acts on the shape memory alloy wire 1 so that the shape memory alloy wire 1 is held on a straight line without loosening. On the other hand, since heat capacity of the pedestal 3 is much larger than heat capacity of the shape memory alloy wire 1, temperature value of the pedestal 3 rarely changes even when the shape memory alloy wire 1 is heated. Therefore, the predetermined distance L between a pair of the supporting units 4 has been maintained.

Under such a condition of energization heating of the shape memory alloy wire 1, when the pressing support 12 and a pair of the pressing units 6 are moved downward toward the pedestal 3 as shown in FIG. 1C, each pressing unit 6 presses the portion to be calked of the electrode 2 (entire of the electrode 2 in this embodiment) which is held on the corresponding supporting unit 4 so as to plastically deform the portion to be calked. Consequently, each electrode 2 is fixed at a predetermined position on the shape memory alloy wire 1 by calking. After completing the fixing process of the electrode 2, the pressing support 12 and both pressing units 6 are moved upward so as to depart from the pedestal 3, and the switch 8 is turned off to stop the energization, and thus, the shape memory alloy wire 1 is detached from the pedestal 3.

In this way, the electrode calking apparatus 101 in accordance with the first embodiment can fix a pair of the electrodes 2 at the positions distant the predetermined distance L on the shape memory alloy wire 1 under the condition of heating the shape memory alloy wire 1 at the temperature enabling to recover the original shape. Since the shape memory alloy wire 1 obtained by this way is considered the variation of the allover length due to thermal expansion, even when the shape memory alloy wire 1 is heated to the temperature enabling to recover the original shape, a desired stress can be controlled precisely and stably. In addition, a possibility that an overload is applied to the shape memory alloy wire 1 in heating condition is reduced so that aged deterioration hardly occurs.

In addition, it is preferable that the energization to the shape memory alloy wire 1 should be controlled to be constant electric current. Thereby, the temperature of the shape memory alloy wire 1 in work operation can be maintained constant with no relation to the working condition.

### (Second Embodiment)

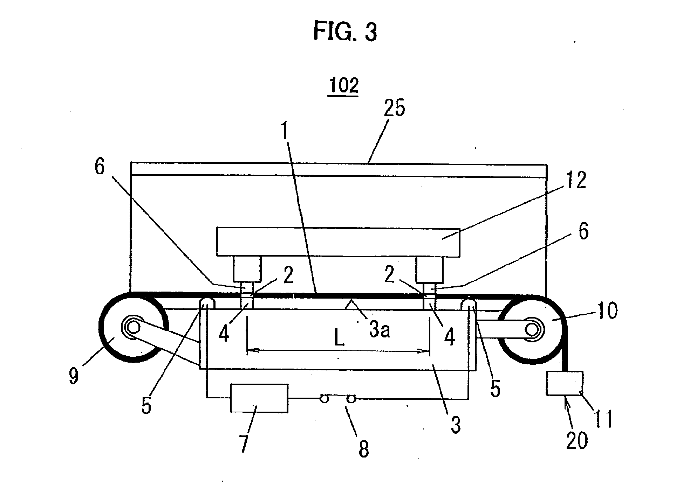

Subsequently, an electrode calking apparatus 102 in accordance with a second embodiment of the present invention is described with reference to FIG. 3. Since the essential configuration of the electrode calking apparatus 102 in accordance with the second embodiment is similar to that of the above mentioned electrode calking apparatus 101 in accordance with the first embodiment, the similar elements are referred by the same symbols so as to omit the detailed description of them, and thus, only the differences are explained below in detail.

In the electrode calking apparatus 102 in accordance with the second embodiment, a cover 25 that covers a space above the supporting face 3a of the pedestal 3 is provided, and the supporting units 4, the energization contacting units 5, the shape memory alloy wire 1, electrodes 2 and the pressing units 6 which are disposed on the pedestal 3 are enclosed by the cover 25. The cover 25 prevents to fall in the temperature of the shape memory alloy wire 1 in the condition of energization heating due to wind effect. According to such a configuration, it is possible to prevent the wind effect from an external space extends to the inside of the cover 25. In addition, the cover 25 may have any configuration if it can cover at least an area of the shape memory alloy wire 1 between a pair of the electrodes 2 to serve as a protection from wind.

### (Third Embodiment)

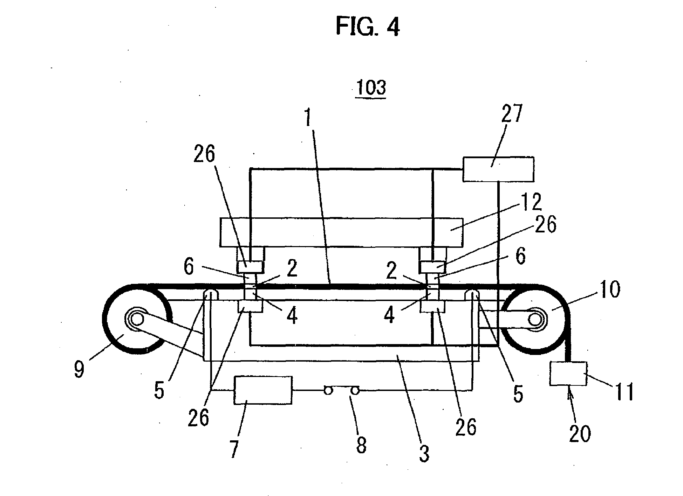

Subsequently, an electrode calking apparatus 103 in accordance with a third embodiment of the present invention is described with reference to FIG. 4. Since the essential configuration of the electrode calking apparatus 103 in accordance with the third embodiment is similar to that of the above mentioned electrode calking apparatus 101 in accordance with the first embodiment, the similar elements are referred by the same symbols so as to omit the detailed description of them, and thus, only the differences are explained below in detail.

In the electrode calking apparatus 103 in accordance with the third embodiment, heaters 26 are respectively established in a pair of the supporting units 4 and a pair of the pressing units 6. Each heater 26 generates heat by power supply from the electric power supply 27 for heating units, and each of them heats the supporting units 4 and the pressing units 6 individually. According to such a configuration, it is possible to avoid an affair that heat of the shape memory alloy wire 1 in energization heating condition is diffused through the supporting units 4 and the pressing units 6 so that temperature fall occurs. The heater 26 may be established only in the supporting units 4 or the pressing units 6.

### (Fourth Embodiment)

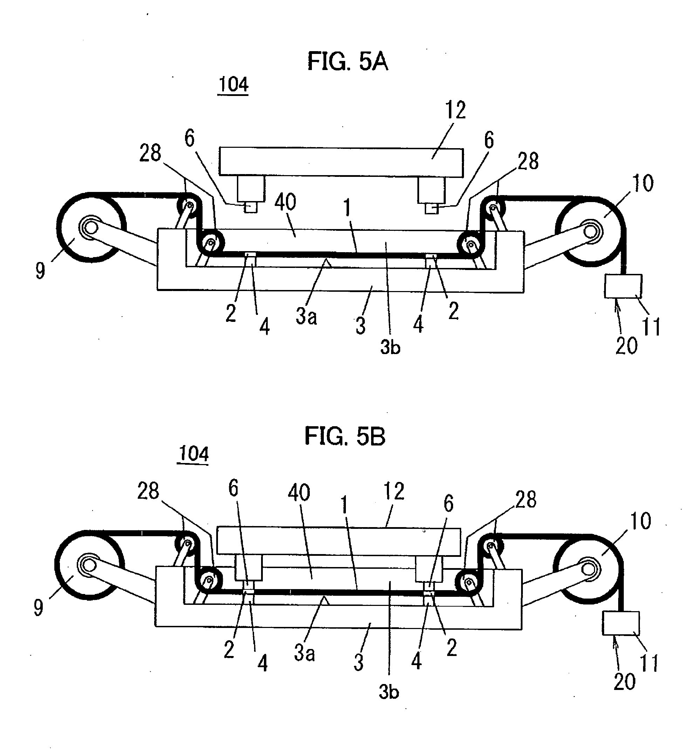

Subsequently, an electrode calking apparatus 104 in accordance with a fourth embodiment of the present invention is described with reference to FIGS. 5A and 5B. Since the essential configuration of the electrode calking apparatus 104 in accordance with the fourth embodiment is similar to that of the above mentioned electrode calking apparatus 101 in accordance with the first embodiment, the similar elements are referred by the same symbols so as to omit the detailed description of them, and thus, only the differences are explained below in detail.

In the electrode calking apparatus 104 in accordance with the fourth embodiment, a fluid reservoir 3b is formed by concaving a center portion of the pedestal 3, and a bottom face of the fluid reservoir 3b serves as the supporting face 3a. Similar to the above mentioned embodiments, a pair of the supporting units 4 is provided on the supporting face 3a, and a pair of pulleys 28 is disposed so that a pair of the supporting units 4 is disposed therebetween. Therefore, the shape memory alloy wire 1 can be supported in shape of cranks along steps in peripheries of the fluid reservoir 3b of the pedestal 3 via a pair of the pulleys 28. In addition, thermally heated fluid 40 such as hot water or oil is filled in the fluid reservoir 3b. Although it is not illustrated in FIGS. 5A and 5B, a pair of the energized contacting units 5 which contacts the shape memory alloy wire 1 is provided at positions on the supporting face 3a between which the supporting units 4 are disposed.

Since the shape memory alloy wire 1 is supported by and the electrodes 2 are held on a pair of the supporting units 4 provided on the supporting face 3a in a condition that the fluid reservoir 3b is filled by the thermally heated fluid 40, at least an area of the shape memory alloy wire 1 between a pair of the electrodes 2 is weltered in the thermally heated fluid 40. Therefore, it is possible to avoid an affair that heat of the shape memory alloy wire 1 in energization heating condition is diffused through the supporting units 4 and the pressing units 6 so that temperature fall occurs.

### (Fifth Embodiment)

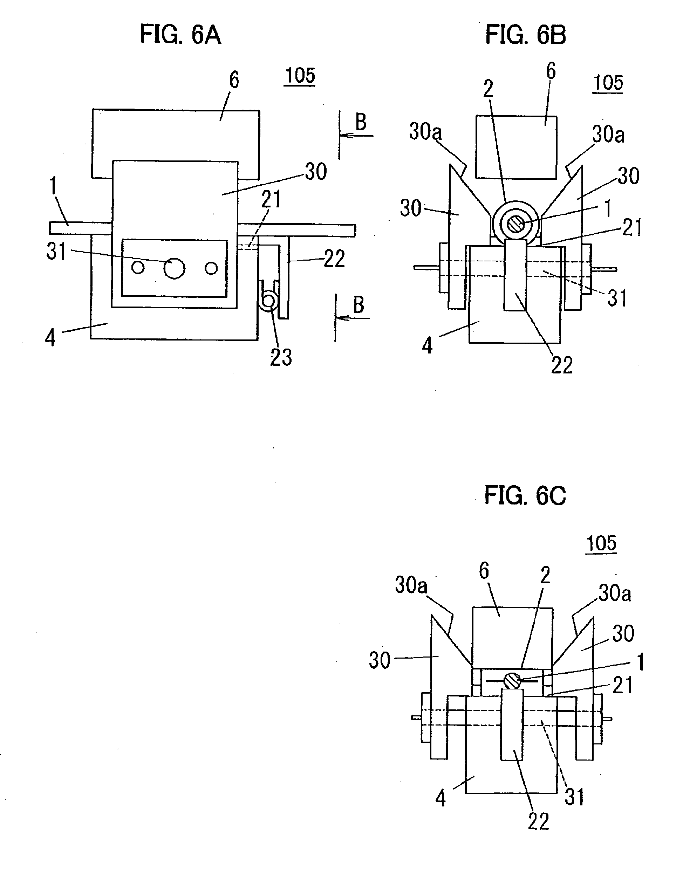

Subsequently, an electrode calking apparatus 105 in accordance with a fifth embodiment of the present invention is described with reference to FIGS. 6A to 6C. Since the essential configuration of the electrode calking apparatus 105 in accordance with the fifth embodiment is similar to that of the above mentioned electrode calking apparatus 101 in accordance with the first embodiment, the similar elements are referred by the same symbols so as to omit the detailed description of them, and thus, only the differences are explained below in detail.

In the electrode calking apparatus 105 in accordance with the fifth embodiment, a pair of electrode holding members 30 is provided to pinch the cylindrical shaped electrode 2 which is held in the concavity 21 of the supporting unit 4 elastically from both sides in a radial direction thereof (in a longitudinal direction in FIG. 6B). The electrode holding members 30 are coupled through an elastic member 31 configured of an extension spring or the like, and biasing forces are applied in directions to approach each other by the elastic member 31. Therefore, as described in the above mentioned first embodiment, the electrode 2 held in the concavity 21 of the supporting unit 4 is positioned in the axial direction thereof by elastically pushing an end face thereof by the moving member 22 for positioning the electrode, and positioned in the radial direction by elastically pushing it from both outsides by a pair of the electrode holding members 30.

Under such a condition, when the shape memory alloy wire 1 is heated by energization heating and the pressing units 6 are moved downward to approach to the pedestal 3, each pressing unit 6 presses the portion to be calked of the electrode 2 (entire of the electrode 2 in this embodiment) held on the supporting unit 4 to deform the portion to be calked of the electrode plastically to be flatten out. Since a tapered face 30a is formed in an upper portion of each of the electrode holding members 30 so as to be slanted that a distance between the tapered faces becomes gradually wider as approaching to upper ends, the pressing unit 6 expands a gap between the electrode holding members 30 by contacting the above tapered faces 30a as proceeding the calking of the electrode 2 by the pressing unit 6.

According to such a configuration, the electrode 2 is pinched between the electrode pinching members 30 at a start point of the fixing operation by calking so as to be positioned in the radial direction certainly, and the electrode pinching members 30 move in opposite directions to depart from each other, so that the electrode 2 is plastically deformed to be flat without any problem. Therefore, it is possible to prevent displacement of the electrode 2 in the fixing operation by calking, and to deform the electrode 2 plastically in desired shape certainly.

### (Sixth Embodiment)

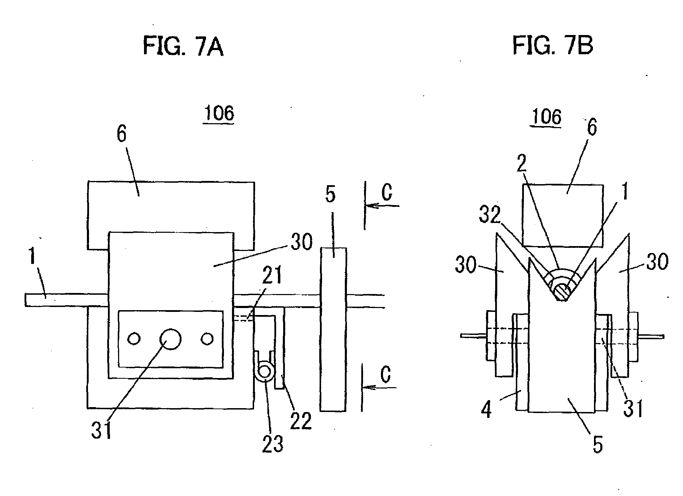

Subsequently, an electrode calking apparatus 106 in accordance with a sixth embodiment of the present invention is described with reference to FIGS. 7A and 7B. Since the essential configuration of the electrode calking apparatus 106 in accordance with the sixth embodiment is similar to that of the above mentioned electrode calking apparatus 105 in accordance with the fifth embodiment, the similar elements are referred by the same symbols so as to omit the detailed description of them, and thus, only the differences are explained below in detail.

In the electrode calking apparatus 106 in accordance with the sixth embodiment, a groove 32 for positioning the shape memory alloy wire 1 by being fitted from above is formed in an upper portion of the energization contacting unit 5 which contacts the shape memory alloy wire 1 to heat by energization. In the figures, only one of the energization contacting units 5 is illustrated, but it is preferable to provide the above groove 32 in both of the energization contacting units 5. It is possible to prevent the displacement of the shape memory alloy wire 1 certainly in process to fix the electrodes to the shape memory alloy wire 1 by calking by providing the groove 32 on the energization contacting unit 5.

In addition, the configurations of the above mentioned embodiments can be modified or combined appropriately, within the scope of the gist of the present invention.

This application is based on Japanese patent applications 2005-341207 and 2006-147369 filed in Japan, the contents of which are hereby incorporated by references.

Although the present invention has been fully described by way of example with reference to the accompanying drawings, it is to be understood that various changes and modifications will be apparent to those skilled in the art. Therefore, unless otherwise such changes and modifications depart from the scope of the present invention, they should be construed as being included therein.

## Claims

1. An electrode calking apparatus for fixing a pair of electrodes on a shape memory alloy wire by calking comprising:
a loading mechanism for applying a predetermined tension to the shape memory alloy wire in an axial direction thereof;
a pair of supporting units that supports the shape memory alloy wire at two supporting points distant a predetermined distance in the axial direction, and holds a pair of electrodes each having a portion to be calked;
a pair of energization contacting units that contacts the shape memory alloy wire at two contacting points between which a pair of the supporting units are disposed, and supplies electric current between the two contacting points; and
a pair of pressing units that fixes the electrodes to the shape memory alloy wire by calking by plastically deforming the portions to be calked of the electrodes held on the supporting units.

2. The electrode calking apparatus in accordance with claim 1 further comprising a cover that covers at least an area of the shape memory alloy wire between a pair of the electrodes.

3. The electrode calking apparatus in accordance with claim 1 further comprising heaters that heats both of or one of a pair of the supporting units and a pair of the pressing units.

4. The electrode calking apparatus in accordance with claim 1 further comprising a thermally heated fluid reservoir to welter at least an area of the shape memory alloy wire between a pair of the electrodes 2 into thermally heated fluid.

5. The electrode calking apparatus in accordance with claim 1 wherein the supporting unit has a concavity for holding the electrode.

6. The electrode calking apparatus in accordance with claim 1 wherein the supporting unit has a pair of electrode holding members that pinches the electrode from both outsides.

7. The electrode calking apparatus in accordance with claim 1 wherein the energization contacting unit has a groove that holds the shape memory alloy wire.

8. The electrode calking apparatus in accordance with claim 1 wherein a pair of the supporting units and a pair of the energization contacting units are disposed on a straight line.

9. The electrode calking apparatus in accordance with claim 1 wherein a positioning member that positions the electrode in the axial direction is provided on the supporting unit.

10. The electrode calking apparatus in accordance with claim 1 wherein
a pair of the supporting units and a pair of the energization contacting units are disposed on a supporting face of a pedestal and on a straight line;
a pair of the pressing units is disposed at positions facing a pair of the supporting units and on a lower face of a pressing support which is provided to face the supporting face of the pedestal; and
the pressing units are moved up and down with the pressing support by an elevation mechanism, and thereby, the shape memory alloy wire and the electrodes are pressed in a condition of pinching between the pressing units and the supporting units so as to fix the electrodes to the shape memory alloy wire by calking.
